# EUROPEAN PATENT APPLICATION

(11) **EP 4 844 032 A1**
(43) Date of publication of application: **25.11.2026**
(21) Application number: 25741757.6
(22) Date of filing: 09.01.2025
(51) Int. Cl.: C09B 67/20, B41M 5/00, C09B 35/035, C09B 67/46, C09D 11/00, C09D 17/00, G03G 9/08, G03G 9/09, G03G 9/097

(54) **PIGMENT COMPOSITION, METHOD FOR PRODUCING SAME, INK, TONER, COATING MATERIAL AND RESIN MOLDED PRODUCT**

(30) Priority: 16.01.2024 JP 2024004466
(71) Applicant: DIC Corporation, Tokyo 174-8520 (JP)
(72) Inventor: TOKUOKA Mayumi, Kamisu-shi, Ibaraki 314-0193 (JP); YAMADA Shogo, Kamisu-shi, Ibaraki 314-0193 (JP)
(74) Representative: TBK
(86) International application number: PCT/JP2025/000430
(87) International publication number: WO 2025/154624

(57) **Abstract**

An object of the present invention is to provide a pigment composition easy to sieve, allowing easy removal of foreign matter, and capable of suppressing an increase in the viscosity of an ink when the pigment composition is used in the ink. Specifically, provided are: a pigment composition containing C.I. Pigment Yellow 180 and a surfactant, wherein a content of the surfactant in 100 mass% of the pigment composition is from 1.5 to 7.0 mass%; and an ink, a toner, a coating material, and a resin molded product obtained using the pigment composition. Also provided is a method for producing a pigment composition, the method including at least: mixing C.I. Pigment Yellow 180, a surfactant, and water to obtain a slurry of a pigment composition; and heating the slurry, wherein an added amount of the surfactant per 100 parts by mass of the C.I. Pigment Yellow 180 is from 1.5 to 7.5 parts by mass.

## Description

### TECHNICAL FIELD

The present invention relates to a pigment composition, a method for producing the pigment composition, an ink, a toner, a coating material, and a resin molded product.

### BACKGROUND ART

While many yellow pigments pose safety concerns, C.I. Pigment Yellow 180 is highly safe and has high resistance properties, such as weather resistance, and thus is used in many applications, such as inks, coating materials, plastics, toners, and inkjet inks.

In addition, because C.I. Pigment Yellow 180 is used in various applications, attempts have been made to improve its physical properties (Patent Literature 1).

### CITATION LIST

### PATENT LITERATURE

Patent Literature 1: JP 2002-201379 A

### SUMMARY OF INVENTION

### TECHNICAL PROBLEM

Patent Literature 1 describes that the physical properties of C.I. Pigment Yellow 180 are improved by adjusting the pH during the coupling reaction and/or using a surface treatment agent in combination; however, there has still been room for improvement. For example, while a poly(oxyalkylene) alkyl ether is treated to improve the wettability of a pigment, the presence of the poly(oxyalkylene) alkyl ether decreases the sieving speed of a yellow pigment composition, thus reducing the work efficiency of a dispersion step.

To solve such a problem, an object of the present invention is to provide a pigment composition easy to sieve, allowing easy removal of foreign matter, and capable of suppressing an increase in the viscosity of an ink when the pigment composition is used in the ink.

### SOLUTION TO PROBLEM

As a result of diligent studies, the present inventors have found that the above problem can be solved by using C.I. Pigment Yellow 180 and a predetermined amount of a surfactant, and have completed the present invention. An example of the configuration of the present invention to solve the above problem is as follows.

Item 1. A pigment composition containing C.I. Pigment Yellow 180 and a surfactant, in which a content of the surfactant in 100 mass% of the pigment composition is from 1.5 to 7.0 mass%.

Item 2. The pigment composition according to item 1, in which the surfactant is a nonionic surfactant.

Item 3. The pigment composition according to item 1 or 2, in which a ratio (h1/h2) of an absolute intensity (h1) of X-ray diffraction at a Bragg angle 2θ of 17.5° ± 0.2° to an absolute intensity (h2) of X-ray diffraction at a Bragg angle 2θ of 18.2° ± 0.2° in a powder X-ray diffraction pattern of the pigment composition by CuKα characteristic X-ray is from 2.00 to 10.00.

Item 4. The pigment composition according to any one of items 1 to 3, in which a specific surface area of the pigment composition is 40 m²/g or more.

Item 5. The pigment composition according to any one of items 1 to 4, in which a sieving speed of the pigment composition is 3.10 mg/(cm²·sec) or more.

Item 6. An ink containing the pigment composition according to any one of items 1 to 5.

Item 7. A toner containing the pigment composition according to any one of items 1 to 5.

Item 8. A coating material containing the pigment composition according to any one of items 1 to 5.

Item 9. A resin molded product containing the pigment composition according to any one of items 1 to 5.

Item 10. A method for producing a pigment composition, the method including at least:
mixing C.I. Pigment Yellow 180, a surfactant, and water to obtain a slurry of a pigment composition; and
heating the slurry, in which
an added amount of the surfactant per 100 parts by mass of the C.I. Pigment Yellow 180 is from 1.5 to 7.5 parts by mass.

### ADVANTAGEOUS EFFECTS OF INVENTION

The present invention can provide a pigment composition easy to sieve and allowing easy removal of foreign matter.

In addition, the pigment composition according to the present invention has good wettability of the pigment with a solvent and thus can suppress an increase in the viscosity of an ink when the pigment composition is used in the ink.

### DESCRIPTION OF EMBODIMENTS

### C.I. Pigment Yellow 180

A pigment composition according to the present invention contains C.I. Pigment Yellow 180.

C.I. Pigment Yellow 180 is a compound represented by Formula (1) below.

C.I. Pigment Yellow 180 is an azo-hydrazo tautomer and thus can contain both an azo form (-N=N-) and a hydrazo form (>N-NH-).

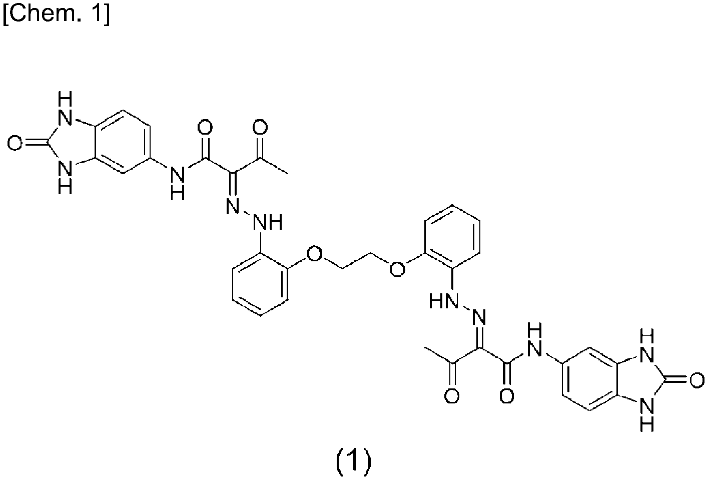

The C.I. Pigment Yellow 180 may be a synthesized product or a commercially available product.

Because too small a content would reduce the tinting strength while too large a content would leave no room for adding a treatment agent for the purpose of improving physical properties, the content of C.I. Pigment Yellow 180 in 100 mass% of the pigment composition is preferably from 93.0 to 98.5 mass%, more preferably from 93.5 to 98.0 mass%, and even more preferably from 94.0 to 97.0 mass%.

### Surfactant

The pigment composition according to the present invention contains a surfactant. Examples of the surfactant include an anionic surfactant, a nonionic surfactant, a cationic surfactant, and an amphoteric surfactant, but from the viewpoint of work efficiency during dispersion, a nonionic surfactant is preferred.

The nonionic surfactant is preferably a poly(oxyalkylene) alkyl ether. The poly(oxyalkylene) alkyl ether is preferably poly(oxyethylene) poly(oxypropylene) lauryl ether, poly(oxyethylene) poly(oxypropylene) tridecyl ether, poly(oxyethylene) poly(oxypropylene) branched decyl ether, poly(oxyethylene) lauryl ether, poly(oxyethylene) isodecyl ether, poly(oxyethylene) poly(oxypropylene) oleyl cetyl ether, or the like.

From the viewpoint of improving adsorption properties to the pigment and wettability of the pigment, the HLB value of the surfactant is preferably from 1 to 19, more preferably from 2 to 18, even more preferably from 5 to 15, and still more preferably from 8 to 12.

In the present specification, "hydrophile-lipophile balance (HLB)" is a value proposed by Griffin and indicating the balance between a hydrophilic group and a lipophilic group in a surfactant molecule. The HLB value can be experimentally determined by comparing the emulsifying power of various surfactants but can be typically determined from Equation 1 below. Equation 1: HLB value = 20 × wt% of hydrophilic portion of surfactant/molecular weight of surfactant

From the viewpoint of avoiding phase separation of the surfactant to treat C.I. Pigment Yellow 180, the cloud point of the surfactant is preferably 35°C or higher, more preferably from 35 to 100°C, and even more preferably from 60 to 80°C.

In the present specification, "cloud point" refers to a temperature at which the transparency of a surfactant aqueous solution decreases and the solution starts to turn white and turbid when the temperature of the surfactant aqueous solution is increased by heating.

The cloud point is measured under conditions selected according to the solubility of a surfactant in water, such as a 1 mass% aqueous solution, a 1 mass% aqueous solution (containing 5 mass% of potassium sulfate), or a 10 mass% aqueous solution (containing 25 mass% of diethylene glycol monobutyl ether) of the surfactant.

One surfactant may be used alone, or two or more may be used in combination.

In addition, a commercially available surfactant can be used.

The content of the surfactant in 100 mass% of the pigment composition is from 1.5 to 7.0 mass%, preferably from 2.0 to 6.5 mass%, and more preferably from 3.0 to 6.0 mass%.

The content of the surfactant in 100 mass% of the pigment composition of less than 1.5 mass% would fail to provide sufficient wettability of the pigment with a solvent and thus would fail to sufficiently suppress an increase in the viscosity of an ink when the pigment composition is used in the ink.

In addition, the surfactant contained in an amount of more than 7.0 mass% in 100 mass% of the pigment composition would attract water molecules in the environment and adsorb a large amount of water molecules on the pigment powder surface. That would make it easier for the powder of the pigment composition to aggregate during sieving of the pigment composition, which would clog the sieve and reduce the sieving speed and the work efficiency.

### Additional Component

The pigment composition may contain an additional component other than C.I. Pigment Yellow 180 and the surfactant as necessary within a range that does not impair the effects of the present invention.

Examples of the additional component include a pigment derivative, an inorganic pigment, a dispersant, rosin, and a polycarboxylic acid compound. Examples of the pigment derivative include a sulfonic acid pigment derivative, an amino group-containing pigment derivative, and a phthalimidomethyl group-containing pigment derivative.

Examples of the inorganic pigment include calcium carbonate, magnesium carbonate, precipitated barium sulfate, kaolin, clay, alumina white, and white carbon.

Examples of the polycarboxylic acid compound include tartaric acid, succinic acid, citric acid, glutaric acid, adipic acid, oxalic acid, malic acid, aspartic acid, malonic acid, pimelic acid, suberic acid, azelaic acid, sebacic acid, aconitic acid, fumaric acid, mesaconic acid, isophthalic acid, terephthalic acid, trimesic acid, benzenetricarboxylic acid, methylisophthalic acid, hydroxyisophthalic acid, methylterephthalic acid, hydroxyterephthalic acid, and phenylenediacetic acid.

### Pigment Composition

The hue of the pigment composition is preferably yellow (yellow pigment composition).

Higher crystallinity increases the solvent resistance and dispersion stability in an ink, and thus can maintain low ink viscosity. Thus, a ratio (h1/h2) of an absolute intensity (h1) of X-ray diffraction at a Bragg angle 2θ of 17.5° ± 0.2° to an absolute intensity (h2) of X-ray diffraction at a Bragg angle 2θ of 18.2° ± 0.2° in a powder X-ray diffraction pattern of the pigment composition by CuKα characteristic X-ray is preferably from 2.00 to 10.00, more preferably from 2.50 to 4.00, and even more preferably from 2.50 to 3.75.

The ratio (h1/h2) of an absolute intensity (h1) of X-ray diffraction at a Bragg angle 2θ of 17.5° ± 0.2° to an absolute intensity (h2) of X-ray diffraction at a Bragg angle 2θ of 18.2° ± 0.2° in a powder X-ray diffraction pattern by CuKα characteristic X-ray is measured using a multipurpose X-ray diffractometer Empyrean (available from Malvern Panalytical).

First, a cell for measurement is filled with a pigment composition, and a pigment powder is pressed with a finger and solidified on a smooth glass plate (glass plate for a 500-mL vacuum bell, available from Sibata Scientific Technology Ltd.) from the opposite side from the measurement surface to smooth the measurement surface. Then, the cell is set in an X-ray diffractometer and scanned with a scan step size of 0.0262° and a speed of a time per step of 4.59° to obtain a powder X-ray diffraction pattern. The maximum intensity of the peak present at a Bragg angle 2θ of 17.5° ± 0.2° in the resulting powder X-ray diffraction pattern is used as the absolute intensity (h1) of X-ray diffraction, the minimum intensity of the valley present at a Bragg angle 2θ of 18.2° ± 0.2° is used as the absolute intensity (h2) of X-ray diffraction, and the absolute intensity ratio (h1/h2) is determined.

From the viewpoints of the tinting strength and dispersibility of the pigment composition, the specific surface area in the pigment composition is preferably 40 m²/g or more, more preferably from 40 to 80 m²/g, and even more preferably from 40 to 60 m²/g.

The specific surface area is measured using 200 mg of the pigment composition and a fully automated specific surface area analyzer Macsorb HM model-1208 (available from Mountech Co., Ltd.) according to the method for measuring gas (nitrogen) adsorption amount by one-point method.

When the pigment composition is produced and/or when the pigment composition is charged into a disperser, the pigment composition is passed through a sieve as a measure against foreign matter, thus leading to a concern that clogging of the sieve would reduce the workability. However, the pigment composition according to the present invention exhibits excellent workability, for example, sieving speed.

The sieving speed of the pigment composition is preferably 3.10 mg/(cm²·sec) or more, more preferably from 3.10 to 4.10 mg/(cm²·sec), and even more preferably from 3.10 to 4.00 mg/(cm²·sec) from the viewpoint of work efficiency.

The sieving speed is measured as follows.

First, 10.0 g of the pigment composition is placed on a sieve (opening 355 µm, wire diameter 224 µm, diameter 10 cm; available from Fujiwara Scientific Co., Ltd.), the sieve is vibrated in the lateral direction for 20 seconds under conditions of a vibration amplitude of 5 cm and a vibration frequency of 3 Hz (3 reciprocations per second), and the weight of the pigment composition that passed through the sieve is measured.

The sieving speed is then determined by dividing the weight of the pigment composition that passed through the sieve by the sieving time and the area of the sieve.

### Method for Producing Pigment Composition

The pigment composition according to the present invention can be produced, for example, by a method for producing a pigment composition, the method including at least:
(a) mixing C.I. Pigment Yellow 180, a surfactant, and water to obtain a slurry of a pigment composition; and
(b) heating the slurry, in which
an added amount of the surfactant per 100 parts by mass of the C.I. Pigment Yellow 180 is from 1.5 to 7.5 parts by mass.

The added amount of the surfactant per 100 parts by mass of C.I. Pigment Yellow 180 is from 1.5 to 7.5 parts by mass, more preferably from 2.0 to 7.0 parts by mass, and even more preferably from 3.5 to 6.5 parts by mass.

From the viewpoint of uniformly treating the pigment particle surfaces with the surfactant, the mixing temperature in step (a) is preferably from 15 to 90°C, more preferably from 20 to 80°C, and even more preferably from 20 to 40°C.

From the viewpoint of uniformly treating the pigment particle surfaces with the surfactant, the mixing time in step (a) is preferably from 0.1 to 180 minutes, more preferably from 0.2 to 120 minutes, and even more preferably from 30 to 90 minutes.

Water is used in an amount that allows a slurry to be obtained.

The amount of water used is preferably from 10 to 1000 parts by mass, more preferably from 10 to 100 parts by mass, and even more preferably from 10 to 50 parts by mass per part by mass of C.I. Pigment Yellow 180.

In addition, the amount of water used is preferably from 50 to 10000 parts by mass, more preferably from 100 to 5000 parts by mass, even more preferably from 150 to 2000 parts by mass, and still more preferably from 300 to 1500 parts by mass per part by mass of the surfactant.

The pH of the slurry of the pigment composition is preferably from 9.5 to 11.5 from the viewpoint of extending the pigment particles to enhance crystallinity. In the present specification, the pH means a value measured for a slurry of the pigment composition at 25°C using a pH meter (Personal pH/ORP Meter PH72 (trade name), available from Yokogawa Electric Corporation).

The pH of the slurry of the pigment composition can be adjusted using a basic compound.

Examples of the basic compound include an alkali metal hydroxide and an alkaline earth metal hydroxide.

Examples of the alkali metal hydroxide include sodium hydroxide and potassium hydroxide.

In addition, examples of the alkaline earth metal hydroxide include calcium hydroxide.

The basic compound is used in an amount that allows the slurry to be adjusted to a target pH.

Step (a) can be performed using a stirrer, a mixer, a shaker, a rotator, a homogenizer, or the like.

From the viewpoints of uniformly treating the pigment particle surfaces with the surfactant and enhancing the crystallinity of the pigment, the heating temperature in step (b) is preferably from 40 to 160°C, more preferably from 80 to 160°C, and even more preferably from 120 to 150°C.

From the viewpoints of uniformly treating the pigment particle surfaces with the surfactant and enhancing the crystallinity of the pigment, the heating time in step (b) is preferably from 0.5 to 24 hours, more preferably from 1 to 12 hours, and even more preferably from 3 to 12 hours.

Step (b) can be performed using an autoclave, a mantle heater, a hot plate, a block bath, a water bath, an oil bath, a bead bath, a throw-in heater, an electromagnetic heater, a microwave heater, steam blowing, or the like.

After step (b) is performed, filtering, washing with water, drying, and/or milling may be performed as necessary.

### Ink

An ink according to the present invention is characterized by containing the pigment composition described above.

Examples of the ink include lithographic printing ink, gravure ink, flexo ink, metal ink, screen ink, UV ink, resist ink for producing a color filter, and inkjet ink.

### Toner

A toner according to the present invention is characterized by containing the pigment composition described above.

The toner is preferably an electrostatic charge image developing toner.

Examples of the electrostatic charge image developing toner include a one-component color magnetic toner (magnetic one-component developing color toner) containing a magnetic material in the toner; a two-component color magnetic toner (magnetic two-component developing color toner), which is electrified by mixing friction with a magnetic carrier; a one-component color non-magnetic color toner (non-magnetic one-component developing color toner) not containing a magnetic material; and a two-component color non-magnetic color toner (non-magnetic two-component developing color toner) mixed with a carrier.

### Coating Material

A coating material according to the present invention is characterized by containing the pigment composition described above.

Examples of the coating material include a coating material for construction, a coating material for automobiles, a coating material for repairing automobiles, a coating material for ships and boats, a coating material for general industries, and a coating material for woodworking.

### Resin Molded Product

A resin molded product according to the present invention is characterized by containing the pigment composition described above.

Examples of the resin molded product include a thermoplastic resin molded product and a thermosetting resin molded product; specific examples include a polyester resin, a polyamide resin, a styrene resin (such as a PS resin, an AS resin, or an ABS resin), an acrylic resin, a polyolefin resin (such as a polyethylene resin or a polyester resin), a poly(alkylene terephthalate) resin (such as a poly(ethylene terephthalate) resin or a poly(butylene terephthalate) resin), a poly(vinyl chloride) resin, a methylpentene resin, a polycarbonate resin, a polyurethane resin, a polyacetal resin, a fluororesin (such as a PTFE resin), a poly(ether sulfone) resin, a poly(phenylene sulfide) resin, and a poly(ether ether ketone) resin.

### EXAMPLES

The present invention will be described in more detail with reference to examples below, but the present invention is not limited to the following examples.

### Production Example 1: Preparation of Crude Wet Cake of C.I. Pigment Yellow 180

After 225 parts by mass of 1,2-bis(2-aminophenoxy)-ethane was dispersed in 3300 parts by mass of water, 538.5 parts by mass of 35 mass% hydrochloric acid was added, and 337 parts by mass of a 40 mass% sodium nitrite aqueous solution was added dropwise while the temperature was maintained at 5°C or lower by adding ice, and a diazo component was prepared.

Next, 455 parts by mass of 5-acetoacetylamino-benzimidazolone was dispersed in 3400 parts by mass of water, then 595 parts by mass of a 25 mass% sodium hydroxide aqueous solution was added and dissolved, and a coupler component was obtained.

The liquid amounts of the diazo component and the coupler component were adjusted to 6500 parts by mass and 4500 parts by mass, respectively, by adding water and ice.

Next, 30.6 parts by mass of 90 mass% acetic acid was added to 6500 parts by mass of water, and then the temperature of this acetic acid solution was adjusted to 20°C. Then, a part of the coupler component was added dropwise to the acetic acid solution until the pH reached 6.0. Thereafter, dropwise addition of the diazo component to the acetic acid solution was started at a constant rate. So as to prevent the presence of an excess amount of a diazonium salt in the acetic acid solution, dropwise addition of the remaining coupler component was started simultaneously with the dropwise addition of the diazo component, and the coupling was performed while the pH of the acetic acid solution was maintained at 6.0 by adjusting the dropwise addition rate of the coupler component.

After the dropwise additions of the coupler component and the diazo component were completed in about 3 hours while ice or a 5 mass% sodium hydroxide solution was added at any time as needed so as to maintain the temperature of the reaction liquid at 20°C and the pH at 6.0 during the coupling, the reaction liquid was heated to 90°C, and the temperature was maintained for 1 hour. The reaction liquid was then filtered and washed with water, and a wet cake of C.I. Pigment Yellow 180 crude was obtained. The solid content in the wet cake of the C.I. Pigment Yellow 180 crude was 34.1 mass%.

### Example 1: Production of Yellow Pigment Composition 1

To a 2-L beaker, 103 parts by mass (solid content 34.1 mass%) of the wet cake of the C.I. Pigment Yellow 180 crude, 660 parts by mass of water, and 0.70 parts by mass of a nonionic surfactant (poly(oxyethylene lauryl ether), HLB value 10.8, cloud point 69°C (when a 10 mass% aqueous solution (containing 25 mass% of diethylene glycol monobutyl ether) was measured)) were placed. After stirring at 25°C for 1 hour with an anchor impeller A-80 (available from AS ONE Corporation), a slurry of a yellow pigment composition with the pH adjusted to 10.5 by adding a 5 mass% sodium hydroxide aqueous solution was obtained. In the resulting slurry of the yellow pigment composition, the amount of water was 21 parts by mass per part by mass of C.I. Pigment Yellow 180 and 1040 parts by mass per part by mass of the nonionic surfactant.

Next, the slurry was transferred to a 1-L autoclave (available from Taiatsu Techno Corporation). The temperature was increased to 140°C over 3 hours and maintained at 140°C for 7 hours.

The slurry was then cooled to room temperature and then filtered and washed with water, and the resulting wet cake of the yellow pigment composition was dried at 100°C for 12 hours with a constant temperature air blow dryer WFO-520 (available from Tokyo Rikakikai Co., Ltd.).

The entire amount of the resulting dried lump was then placed in a large mill cup (volume 200 mL) of a portable mill for laboratory use LAB MILL (available from Osaka Chemical Co., Ltd.) and milled by operating the mill for 30 seconds, and a yellow pigment composition 1 was obtained.

### Example 2: Production of Yellow Pigment Composition 2

A yellow pigment composition 2 was obtained in the same manner as in Example 1, except that the added amount of the nonionic surfactant in Example 1 was changed to 1.40 parts by mass.

In the slurry of the yellow pigment composition, the amount of water was 21 parts by mass per part by mass of C.I. Pigment Yellow 180 and 520 parts by mass per part by mass of the nonionic surfactant.

### Example 3: Production of Yellow Pigment Composition 3

A yellow pigment composition 3 was obtained in the same manner as in Example 1, except that the added amount of the nonionic surfactant in Example 1 was changed to 2.10 parts by mass.

In the slurry of the yellow pigment composition, the amount of water was 21 parts by mass per part by mass of C.I. Pigment Yellow 180 and 345 parts by mass per part by mass of the nonionic surfactant.

### Example 4: Production of Yellow Pigment Composition 4

A yellow pigment composition 4 was obtained in the same manner as in Example 1, except that the added amount of the nonionic surfactant in Example 1 was changed to 1.23 parts by mass.

In the slurry of the yellow pigment composition, the amount of water was 21 parts by mass per part by mass of C.I. Pigment Yellow 180 and 594 parts by mass per part by mass of the nonionic surfactant.

### Comparative Example 1: Production of Yellow Pigment Composition A

A yellow pigment composition A was obtained in the same manner as in Example 1, except that the added amount of the nonionic surfactant in Example 1 was changed to zero.

In the slurry of the yellow pigment composition, the amount of water was 21 parts by mass per part by mass of C.I. Pigment Yellow 180.

### Comparative Example 2: Production of Yellow Pigment Composition B

A yellow pigment composition B was obtained in the same manner as in Example 1, except that the added amount of the nonionic surfactant in Example 1 was changed to 2.80 parts by mass.

In the slurry of the yellow pigment composition, the amount of water was 21 parts by mass per part by mass of C.I. Pigment Yellow 180 and 260 parts by mass per part by mass of the nonionic surfactant.

### Evaluation of Pigment Compositions

The ratios (h1/h2) of absolute intensities in X-ray diffraction, specific surface areas, sieving speeds, and ink viscosities of the produced pigment compositions were measured.

The results are shown in Table 1.

The ink viscosity was measured as follows.

First, 6.0 g of the yellow pigment composition, 24.0 g of polyamide (PA) gravure varnish (available from DIC Corporation), 4.2 g of toluene (available from Kanto Chemical Co., Inc.), 0.9 g of ethyl acetate (available from Kanto Chemical Co., Inc.), 0.9 g of isopropanol (available from Kanto Chemical Co., Inc.), and 120 g of 1/8-inch steel beads (available from Mochiki Steel Ball & Bearing Co., Ltd.) were placed in a 100-mL wide mouth bottle made of polyethylene and were dispersed for 30 minutes with a paint shaker (available from Toyo Seiki Seisaku-sho, Ltd.). Next, 12.0 g of polyamide gravure varnish (available from DIC Corporation) and 12.0 g of nitrocellulose (NC) varnish (available from DIC Corporation) were additionally placed and dispersed for 5 minutes, and a PA/NC ink was obtained. The prepared PA/NC ink was transferred to a glass bottle (Tableware Bottle M-70, available from Hakuyo Glass Co., Ltd.) and was allowed to stand in a multi-safety drier MSO-45TPH (available from FUTABA KAGAKU CO., LTD.) at 50°C for 7 days. Subsequently, the PA/NC ink was allowed to stand in a thermostatic chamber at 20°C for 1 hour or more, and then the ink viscosity was measured using an R85 viscometer RB85L (available from Toki Sangyo Co., Ltd.) under a condition of a rotation speed of 60 rpm.

**[Table 1]**

| Table 1 | | C.I. Pigment Yellow 180 | Surfactant | Ratio (h1/h2) of absolute intensities in X-ray diffraction | Specific surface area | Sieving speed | Ink viscosity |
|---|---|---|---|---|---|---|---|
| | | [mass%] | [mass%] | [-] | [m²/g] | [mg/(cm²·sec)] | [cP] |
| Example 1 | Yellow pigment composition 1 | 98.0 | 2.0 | 3.36 | 59 | 3.95 | 168 |
| Example 2 | Yellow pigment composition 2 | 96.2 | 3.8 | 3.38 | 47 | 3.87 | 158 |
| Example 3 | Yellow pigment composition 3 | 94.3 | 5.7 | 3.71 | 44 | 3.32 | 149 |
| Example 4 | Yellow pigment composition 4 | 96.6 | 3.4 | 2.93 | 47 | 3.90 | 162 |
| Comparative Example 1 | Yellow pigment composition A | 100.0 | 0.0 | 3.65 | 64 | 4.11 | 171 |
| Comparative Example 2 | Yellow pigment composition B | 92.6 | 7.4 | 3.44 | 36 | 3.00 | 146 |

The examples and comparative examples confirmed that the pigment composition according to the present invention has a good sieving speed.

In addition, the examples and comparative examples confirmed that the pigment composition according to the present invention has good wettability of the pigment with a solvent and thus can suppress an increase in the viscosity of an ink when the pigment composition is used in the ink.

### INDUSTRIAL APPLICABILITY

The pigment composition of the present invention can be used in inks, toners, coating materials, and resin molded products.

## Claims

1. A pigment composition comprising C.I. Pigment Yellow 180 and a surfactant, wherein a content of the surfactant in 100 mass% of the pigment composition is from 1.5 to 7.0 mass%.

2. The pigment composition according to claim 1, wherein the surfactant is a nonionic surfactant.

3. The pigment composition according to claim 1 or 2, wherein a ratio (h1/h2) of an absolute intensity (h1) of X-ray diffraction at a Bragg angle 2θ of 17.5° ± 0.2° to an absolute intensity (h2) of X-ray diffraction at a Bragg angle 2θ of 18.2° ± 0.2° in a powder X-ray diffraction pattern of the pigment composition by CuKα characteristic X-ray is from 2.00 to 10.00.

4. The pigment composition according to any one of claims 1 to 3, wherein a specific surface area of the pigment composition is 40 m²/g or more.

5. The pigment composition according to any one of claims 1 to 4, wherein a sieving speed of the pigment composition is 3.10 mg/(cm²·sec) or more.

6. An ink comprising the pigment composition according to any one of claims 1 to 5.

7. A toner comprising the pigment composition according to any one of claims 1 to 5.

8. A coating material comprising the pigment composition according to any one of claims 1 to 5.

9. A resin molded product comprising the pigment composition according to any one of claims 1 to 5.

10. A method for producing a pigment composition, the method comprising at least:
mixing C.I. Pigment Yellow 180, a surfactant, and water to obtain a slurry of a pigment composition; and
heating the slurry, wherein
an added amount of the surfactant per 100 parts by mass of the C.I. Pigment Yellow 180 is from 1.5 to 7.5 parts by mass.
